# EUROPEAN PATENT APPLICATION

(11) **EP 4 421 928 A1**
(43) Date of publication of application: **28.08.2024**
(21) Application number: 23216787.4
(22) Date of filing: 14.12.2023
(51) Int. Cl.: H01M 10/04, H01M 50/103, H01M 50/107, H01M 50/471, H01M 50/474, H01M 50/477

(54) **SECONDARY BATTERY**

(30) Priority: 27.02.2023 KR 20230026126
(71) Applicant: Samsung SDI Co., Ltd., Yongin-si, Gyeonggi-do 17084 (KR)
(72) Inventor: KIM, Dae Kyu, 17084 Yongin-si (KR)
(74) Representative: Marks & Clerk LLP

(57) **Abstract**

A secondary battery includes: an electrode assembly comprising a lead tab; a case configured to accommodate the electrode assembly and an electrolyte solution; a cap assembly electrically connected to the lead tab, and coupled to the case to seal the case; and an insulation plate between the electrode assembly and the cap assembly within the case, and having a tab opening configured to enable the lead tab to be drawn out, wherein the insulation plate comprises a plurality of linear members spaced apart from each other, and a plurality of openings having a size in a range of 0.1 mm to 3 mm are regularly positioned between the plurality of linear members.

## Description

### BACKGROUND

### 1. Field

Aspects of some embodiments of the present disclosure relate to a secondary battery.

### 2. Description of Related Art

A secondary battery generally includes an electrode assembly, a case accommodating the electrode assembly and electrolyte solution therein, and a cap assembly coupled to an opening of the case to seal the case. An insulation plate may be positioned between the electrode assembly and the cap assembly inside the case to insulate the electrode assembly from the cap assembly.

The insulation plate may include an insulating film made of polypropylene (PP) material, which may be manufactured by an extrusion molding method, and various openings may be processed therein by a mold punching method. For example, an opening for drawing out a lead tab of the electrode assembly, an opening for injecting an electrolyte solution, and an opening for discharging gas generated from the electrode assembly may be positioned in the insulation plate.

The above information disclosed in this Background section is only for enhancement of understanding of the background and therefore the information discussed in this Background section does not necessarily constitute prior art.

### SUMMARY

Aspects of some embodiments of the present disclosure may include a secondary battery having a relatively increased capacity while maintaining insulation performance by reducing the thickness, smoothly performing injection of electrolyte solution toward an electrode assembly and gas discharge toward a cap assembly, and being provided with an improved insulation plate capable of exerting a buffering effect by simultaneous deformation when structural warping occurs inside the secondary battery.

According to some embodiments, a secondary battery includes an electrode assembly, a case, a cap assembly, and an insulation plate. According to some embodiments, the electrode assembly includes a lead tab. According to some embodiments, the case is configured to accommodate the electrode assembly and an electrolyte solution. According to some embodiments, the cap assembly is electrically connected to the lead tab, and coupled to the case to seal the case. According to some embodiments, the insulation plate is positioned between the electrode assembly and the cap assembly within the case, and is provided with a tab opening for drawing out the lead tab. According to some embodiments, the insulation plate includes a plurality of linear members spaced apart from each other, and a plurality of openings having a size of 0.1 mm to 3 mm are regularly positioned (e.g. equally spaced) between the plurality of linear members.

According to some embodiments, the plurality of linear members may include a plurality of first linear members positioned parallel to a first direction, and a plurality of curved members positioned between respective adjacent two first linear members among the plurality of first linear members. According to some embodiments, the plurality of curved members may be configured to form a serpentine pattern by using a combination of a first semicircular portion and a second semicircular portion.

According to some embodiments, the first semicircular portion may be in contact with a first one first linear member among the adjacent two first linear members, and the second semicircular portion is in contact with a second one first linear member. According to some embodiments, the first semicircular portion and the second semicircular portion may be alternately positioned one by one along the first direction, and in contact with each other at an inflection point.

According to some embodiments, the plurality of linear members may include a plurality of first linear members positioned parallel to a first direction, and a plurality of oblique members positioned between respective adjacent two first linear members among the plurality of first linear members, and configured to form a zigzag pattern by using a combination of a first oblique portion and a second oblique portion.

According to some embodiments, the first oblique portion and the second oblique portion may be alternately positioned one by one along the first direction. According to some embodiments, the first oblique portion and the second oblique portion and a first one first linear member may form a triangle.

According to some embodiments, the plurality of linear members may further include a second linear member. According to some embodiments, the second linear member may cross a center of the insulation plate along a second direction perpendicular to the first direction.

According to some embodiments, the plurality of linear members may include a plurality of third linear members positioned parallel to a first direction, and a plurality of fourth linear member perpendicular to the plurality of third linear members.

According to some embodiments, the insulation plate may further include an edge portion positioned at an edge, and an opening edge portion forming a boundary of the tab opening. According to some embodiments, the plurality of linear members is in contact with the edge portion and the opening edge portion to be integrally connected to the edge portion and the opening edge portion.

According to some embodiments, the insulation plate may further include an adsorption portion formed in a ring shape along an edge. According to some embodiments, the adsorption portion may have a width of 0.5 mm to 1.8 mm.

According to some embodiments, the insulation plate may be manufactured by injection molding. According to some embodiments, the insulation plate may include at least one of polypropylene (PP), polybutylene terephthalate (PBT), heat-resistant polystyrene (OPS), crosslinked polypropylene (PP), and crosslinked polyethylene (PE). According to some embodiments, the insulation plate may have a thickness of 0.3 mm to 0.5 mm.

According to some embodiments, a secondary battery includes an electrode assembly, a case, a cap assembly, and an insulation plate. According to some embodiments, the electrode assembly includes a lead tab. According to some embodiments, the case is configured to accommodate the electrode assembly and an electrolyte solution. According to some embodiments, the cap assembly is electrically connected to the lead tab, and coupled to the case to seal the case. According to some embodiments, the insulation plate is positioned between the electrode assembly and the cap assembly within the case, and is provided with a tab opening for drawing out the lead tab. According to some embodiments, the insulation plate includes an edge portion positioned at an edge, an opening edge portion forming a boundary of the tab opening, and a plurality of linear members spaced apart from each other in region between the edge portion and the opening edge portion, and a plurality of openings are regularly positioned (e.g. equally spaced) between the plurality of linear members.

According to some embodiments, the insulation plate may be manufactured by injection molding.

According to some embodiments, the plurality of openings each may have a size of 0.1 mm to 3 mm.

At least some of the above and other features of the invention are set out in the claims.

In a secondary battery according to some embodiments, the insulation plate may, by using thin thickness, not only increase capacity of the secondary battery but also firmly insulate between the cap assembly and the electrode assembly, and when structural warping occurs within the secondary battery, a buffering effect may be obtained by the simultaneous deformation of the insulation plate due to easy deformation by an external force.

In addition, because a plurality of openings are regularly positioned in the insulation plate, the insulation plate may evenly inject the electrolyte solution over the entire electrode assembly during the process of injecting the electrolyte solution, and evenly discharge the gas generated from the electrode assembly upward.

### BRIEF DESCRIPTION OF THE DRAWINGS

FIG. 1 is a perspective view of a secondary battery according to some embodiments.
FIG. 2 is a cross-sectional view taken along the line II-II of the secondary battery shown in FIG. 1 according to some embodiments.
FIG. 3 is a top plan view of an insulation plate of the secondary battery shown in FIG. 2 according to some embodiments.
FIG. 4 is a cross-sectional view taken along the line IV-IV of the insulation plate shown in FIG. 3 according to some embodiments.
FIG. 5 is a partial enlarged view of the insulation plate shown in FIG. 3 according to some embodiments.
FIG. 6 is a top plan view of an insulation plate according to some embodiments.
FIG. 7 is a partial enlarged view of the insulation plate shown in FIG. 6 according to some embodiments.
FIG. 8 is a top plan view of an insulation plate according to some embodiments.
FIG. 9 is a partial enlarged view of the insulation plate shown in FIG. 8 according to some embodiments.
FIG. 10 is a top plan view of an insulation plate according to some embodiments.

### DETAILED DESCRIPTION

Aspects of some embodiments of the present invention will be described more fully hereinafter with reference to the accompanying drawings, in which embodiments of the invention are shown. As those skilled in the art would realize, the described embodiments may be modified in various different ways, all without departing from the scope of the present invention.

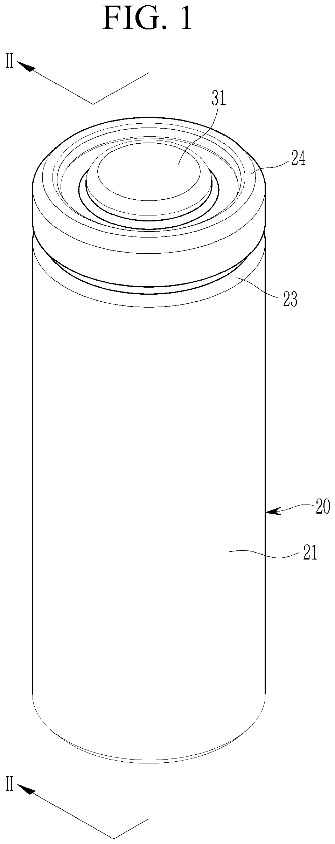

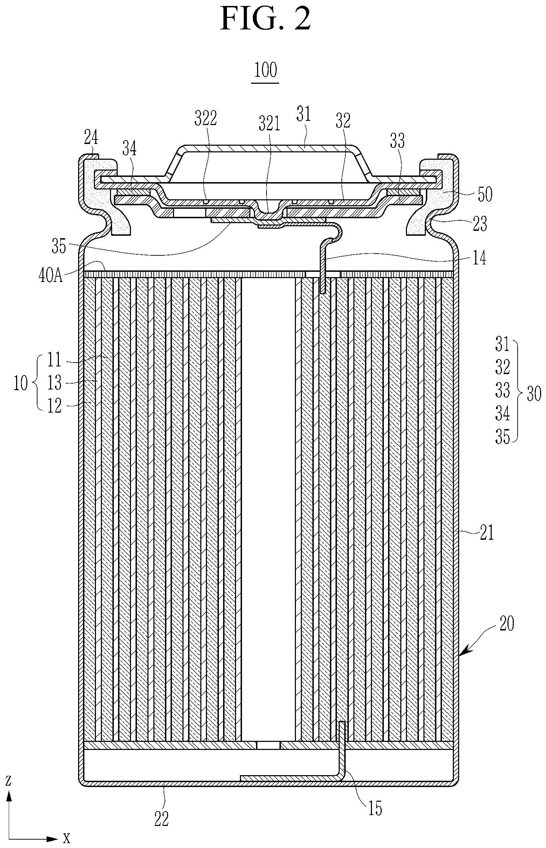

FIG. 1 is a perspective view of a secondary battery according to some embodiments. FIG. 2 is a cross-sectional view taken along the line II-II of the secondary battery shown in FIG. 1. Although a cylindrical secondary battery will be described below for convenience, the technical disclosure of embodiments according to the present disclosure is not limited to a cylindrical secondary battery, and may include all secondary batteries having other external shapes, such as a prismatic shape.

Referring to FIG. 1 and FIG. 2, a secondary battery 100 according to some embodiments includes an electrode assembly 10, a case 20 configured to accommodate the electrode assembly 10 and an electrolyte solution, a cap assembly 30 coupled to opening of the case 20 to seal the case 20, and an insulation plate 40A positioned between the electrode assembly 10 and the cap assembly 30 within the case 20.

The electrode assembly 10 may include a separator 13, and a first electrode 11 and a second electrode 12 interposing the separator 13, and may be wound in the form or configuration of a jelly-roll.

The first electrode 11 includes a first substrate, and a first active material layer positioned on the first substrate. A first lead tab 14 may extend outward from a first uncoated region of the first substrate where the first active material layer is not positioned, and the first lead tab 14 may be electrically connected to the cap assembly 30.

The second electrode 12 includes a second substrate, and a second active material layer positioned on the second substrate. A second lead tab 15 may extend outward from a second uncoated region of the second substrate where the second active material layer is not positioned, and the second lead tab 15 may be electrically connected to the case 20. The first lead tab 14 and the second lead tab 15 may extend in opposite directions.

The first electrode 11 may function as a positive electrode. In this case, the first substrate may include, for example, aluminium foil, and the first active material layer may include, for example, transition metal oxide. The second electrode 12 may function as a negative electrode. In this case, the second substrate may include, for example, copper foil or nickel foil, and the second active material layer may include, for example, graphite.

The separator 13 functions to prevent or reduce instances of a short circuit between the first electrode 11 and the second electrode 12 while allowing movement of lithium ions. The separator 13 may include, for example, polyethylene film, polypropylene film, polyethylene-polypropylene film, or the like.

The case 20 is configured to accommodate the electrode assembly 10 and the electrolyte solution, and forms an external appearance of the secondary battery 100 together with the cap assembly 30. The case 20 may include a body portion 21 of a generally cylindrical shape and a bottom portion 22 connected to a first side of the body portion 21. A beading portion 23 deformed inward may be positioned in the body portion 21, and a crimping portion 24 bent inward may be positioned in an opening-side end portion of the body portion 21.

The beading portion 23 may suppress the movement of the electrode assembly 10 inside the case 20 and may facilitate seating of a gasket 50 and the cap assembly 30. The crimping portion 24 may firmly fix the cap assembly 30 by pressing the edge of the cap assembly 30 through the gasket 50. The case 20 may be made of iron plated with nickel, for example.

The electrolyte solution may include a lithium salt and an organic solvent. The lithium salt may include LiPF₆, LiBF₄, or the like, and the organic solvent may include ethylene carbonate (EC), propylene carbonate (PC), diethyl carbonate (DEC), dimethyl carbonate (DMC), ethyl methyl carbonate (EMC), or the like.

The cap assembly 30 may be fixed to an inner side of the crimping portion 24 through the gasket 50 to seal the case 20. The cap assembly 30 may include a cap-up 31, a safety vent 32, a cap-down 33, an insulation member 34, and a sub-plate 35, but is not limited to such examples, and various modifications may be available.

The cap-up 31 may be positioned at the top of the cap assembly 30. The cap-up 31 may include a terminal portion protruding convexly upward to be connected to an external circuit, and an outlet configured to discharge gas may be positioned around the terminal portion.

The safety vent 32 may be located under the cap-up 31. The safety vent 32 may include a protruding portion 321 protruding convexly downward and connected to the sub-plate 35 and at least one notch 322 positioned around the protruding portion 321.

When gas is generated, for example, due to overcharging or abnormal operation of the secondary battery, the protruding portion 321 may be deformed upward by pressure to become separated from the sub-plate 35, while the safety vent 32 may be cut along the notch 322. The safety vent 32 may prevent or reduce instances of the secondary battery exploding by discharging gas to the outside.

The cap-down 33 may be positioned below the safety vent 32. A first opening for exposing the protruding portion 321 of the safety vent 32 and a second opening for discharging gas may be positioned in the cap-down 33. The insulation member 34 may be positioned between the safety vent 32 and the cap-down 33 to insulate the safety vent 32 and the cap-down 33.

The sub-plate 35 may be positioned below the cap-down 33. The sub-plate 35 may be fixed to a lower surface of the cap-down 33 so as to block the first opening of the cap-down 33, and the protruding portion 321 of the safety vent 32 may be fixed to the sub-plate 35. The first lead tab 14 drawn out from the electrode assembly 10 may be fixed to the sub-plate 35. Accordingly, the cap-up 31, the safety vent 32, the cap-down 33, and the sub-plate 35 may be electrically connected to the first electrode 11 of the electrode assembly 10.

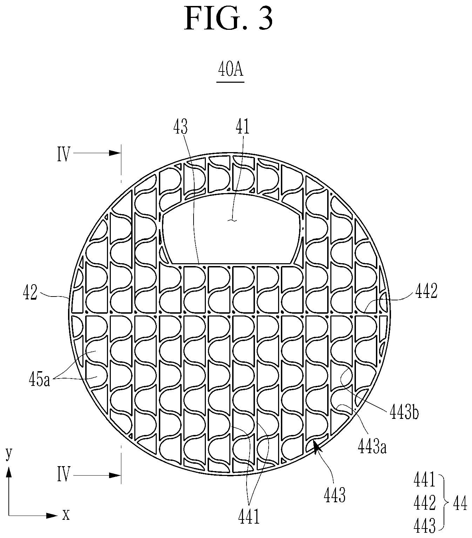

The insulation plate 40A may be positioned to be in contact with the electrode assembly 10 below the beading portion 23, and a tab opening 41 (see FIG. 3) for drawing out the lead tab may be provided in the insulation plate 40A. The cap assembly 30 electrically connected to the first electrode 11 by the first lead tab 14 faces the electrode assembly 10 interposing the insulation plate 40A, and may maintain an insulated state with respect to the electrode assembly 10 due to the insulation plate 40A.

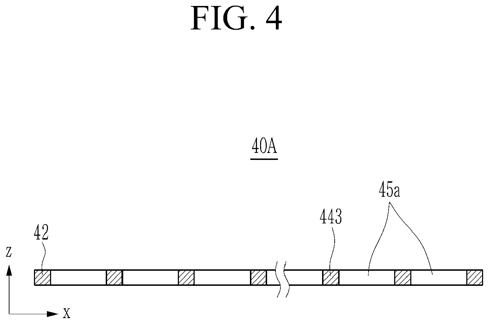

FIG. 3 is a top plan view of an insulation plate of the secondary battery shown in FIG. 2. FIG. 4 is a cross-sectional view taken along the line IV-IV of the insulation plate shown in FIG. 3.

Referring to FIG. 3 and FIG. 4, the insulation plate 40A may include an edge portion 42 positioned along an edge (of the insulation plate), an opening edge portion 43 forming a boundary of the tab opening 41, and a plurality of linear members 44 spaced apart from each other in a region between the edge portion 42 and the opening edge portion 43. A plurality of openings 45a may be regularly positioned (e.g. equally spaced) between the plurality of linear members 44.

The plurality of linear members 44 may be formed as a combination of a plurality of linear members 441 and 442 and a plurality of curved members 443. For example, a plurality of first linear members 441 may be positioned parallel to a first direction (y-axis direction) being spaced apart (e.g. equally spaced apart) from each other, and the plurality of curved members 443 may be arranged to form a serpentine pattern between respective adjacent two first linear members 441 among the plurality of first linear members 441. In addition, a second linear member 442 may be positioned along a second direction (x-axis direction) perpendicular to the first direction (y-axis direction) to cross a center of the insulation plate 40A.

The plurality of linear members 441 and 442 may be in contact with the edge portion 42, and some of the first linear members 441 may be in contact with the opening edge portion 43. Each of the plurality of curved members 443 may be in contact with the adjacent two first linear members 441. Accordingly, the edge portion 42, the opening edge portion 43, the plurality of linear members 441 and 442, and the plurality of curved members 443 are integrally connected without any disconnected portion, to form the single insulation plate 40A.

The plurality of curved members 443 may be formed as a combination of a first semicircular portion 443a and a second semicircular portion 443b. For example, in each of the plurality of curved members 443, the first semicircular portion 443a in contact with a first one first linear member 441 among the adjacent two first linear members 441 and the second semicircular portion 443b in contact with a second one first linear member 441 may be alternately connected one by one along the first direction (y-axis direction).

Referring to the drawings, the first semicircular portion 443a may form a convex semicircle toward the left-side first linear member 441 among the adjacent two first linear members 441, and the second semicircular portion 443b may form a convex semicircle toward the right-side first linear member 441. A portion of a curved member 443 where the first semicircular portion 443a and the second semicircular portion 443b are connected may be an inflection point at which the curvature is reversed.

The first semicircular portion 443a and the second semicircular portion 443b may have the same curvature (e.g. same absolute curvature, but opposite in direction) and the same line width. In addition, the plurality of curved members 443 may have a translational symmetry along the second direction (x-axis direction) crossing the first direction (y-axis direction). That is, the plurality of curved members 443 may all have the same shape along the second direction (x-axis direction) without being offset along the first direction (y-axis direction).

An insulation plate may be made by processing various openings, for example, an opening for drawing out the first lead tab, an opening for injecting the electrolyte solution, an opening for discharging gas, or the like, by a mold punching method in an insulation film manufactured by an extrusion molding method. In contrast, the insulation plate 40A according to some embodiments may be manufactured by injection molding, and the plurality of openings 45a may be regularly positioned (e.g. equally spaced) between the plurality of linear members 441 and 442 and the plurality of curved members 443.

The insulation plate 40A may allow injection of the electrolyte solution downward through the plurality of openings 45a, and allow discharge of any gas generated from the electrode assembly 10 upward. That is, the plurality of openings 45a regularly provided in the insulation plate 40A may act as an electrolyte injection opening and a gas outlet at the same time.

The insulation plate 40A may include at least one of polypropylene (PP), polybutylene terephthalate (PBT), heat-resistant polystyrene (OPS), crosslinked polypropylene (PP), and crosslinked polyethylene (PE). On the other hand, in addition to these materials, any plastic that may be used for injection molding may be used as a material for the insulation plate 40A.

The insulation plate 40A may have a thickness of generally 0.3 mm to 0.5 mm. If a thickness of the insulation plate 40A is less than 0.3 mm, the insulation function of the insulation plate 40A may deteriorate, which may lead to a short circuit between the cap assembly 30 and the electrode assembly 10. If the thickness of the insulation plate 40A exceeds 0.5 mm, the insulation plate 40A may occupy excessive volume within the case 20, thereby deteriorating the capacity of the secondary battery.

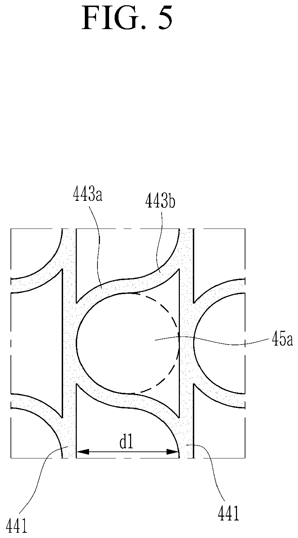

FIG. 5 is a partial enlarged view of the insulation plate shown in FIG. 3.

Referring to FIG. 5, assuming an imaginary circle (shown in a dotted line) of which a half is surrounded by the first semicircular portion 443a or the second semicircular portion 443b, a size of an opening 45a of the insulation plate 40A may be defined as a diameter of the imaginary circle. A distance d1 between the adjacent two first linear members 441 among the plurality of first linear members 441 may be equal to the diameter of the imaginary circle.

Referring to FIG. 3 to FIG. 5, the size of the opening 45a of the insulation plate 40A may be approximately 0.1 mm to 3 mm (e.g. 0.5 mm to 2 mm, or 1 mm to 2 mm). Because the size of the opening 45a that may be manufactured by injection molding is generally 0.1 mm, it may be difficult to manufacture the opening 45a of a smaller size. If the size of the opening 45a of the insulation plate 40A exceeds 3 mm, the insulation function of the insulation plate 40A may be deteriorated. The above-described range of the opening 45a may include a range smaller than the minimum size of the opening that may be implemented in a typical mold punching process.

In the secondary battery 100 according to some embodiments, the insulation plate 40A includes the plurality of linear members 44 manufactured by injection molding, and the plurality of openings 45a may be regularly positioned (e.g. equally spaced) between the plurality of linear members 44 in an entire range of the insulation plate 40A excluding the tab opening 41. That is, the plurality of openings 45a may be evenly distributed throughout the insulation plate 40A.

The insulation plate 40A may, by using a thin thickness, not only increase capacity of the secondary battery 100 but also firmly insulate between the cap assembly 30 and the electrode assembly 10, and when structural warping occurs within the secondary battery 100, a buffering effect may be obtained by simultaneous (or concurrent) deformation of the insulation plate 40A due to relatively easy deformation by an external force.

In addition, because the plurality of openings 45a are regularly positioned in the insulation plate 40A, the insulation plate 40A may allow even injection of the electrolyte solution over the entire electrode assembly 10 during the process of injecting the electrolyte solution, and allow even discharge of any gas generated from the electrode assembly 10 upward. On the other hand, because the openings by the mold punching method may mostly exist in a particular position of the insulation plate, it may be difficult to inject the electrolyte solution and discharge the gas evenly.

Subsequently, various modifications of the insulation plate will be described.

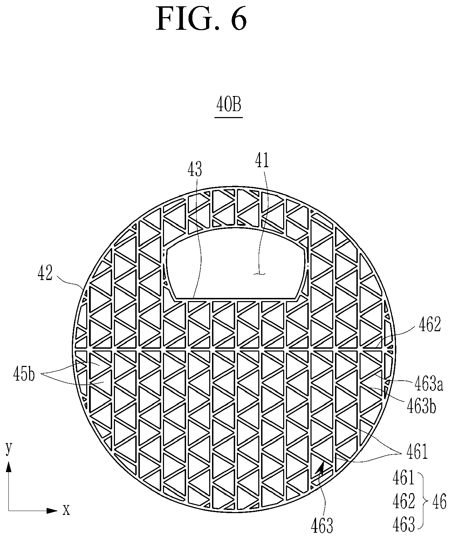

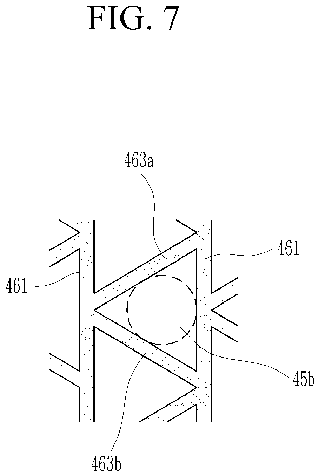

FIG. 6 is a top plan view of an insulation plate according to some embodiments. FIG. 7 is a partial enlarged view of the insulation plate shown in FIG. 6.

Referring to FIG. 6 and FIG. 7, in an insulation plate 40B according to some embodiments, a plurality of linear members 46 may be formed as a combination of a plurality of linear members 461 and 462 and a plurality of oblique members 463. The plurality of oblique members 463 may be formed as a combination of a first oblique portion 463a and a second oblique portion 463b. For example, each of the plurality of oblique members 463 may be formed such that the first oblique portion 463a and the second oblique portion 463b may be alternately arranged one by one along the first direction (y-axis direction).

Referring to the drawings, the first oblique portion 463a may be positioned obliquely downward from the right-side first linear member 461 among the adjacent two first linear members 461 toward the left-side first linear member 461, and the second oblique portion 463b may be positioned obliquely downward from the left-side first linear member 461 to the right-side first linear member 461. The first oblique portion 463a and the second oblique portion 463b may have the same slope (e.g. same absolute gradient, but opposite in direction) and the same line width. In addition, the plurality of oblique members 463 may have a translational symmetry along the second direction (x-axis direction). The plurality of oblique members 463 may be arranged to form a zigzag pattern between respective adjacent two first linear members 461 among the plurality of first linear members 461.

Triangular openings 45b may be regularly positioned (e.g. equally spaced) between the plurality of linear members 461 and 462 and the plurality of oblique members 463. The material and thickness of the insulation plate 40B and size of an opening 45b may be the same as those of the insulation plate 40A according to some embodiments as described above. Here, supposing the imaginary circle (shown as a dotted line in FIG. 7) is tangent to sides of the triangular opening, the size of the opening 45b may be defined as a diameter of the imaginary circle.

The insulation plate 40B according to some embodiments may be configured the same as the insulation plate 40A according to some embodiments as described above, except that the plurality of curved members 443 are replaced with the plurality of oblique members 463.

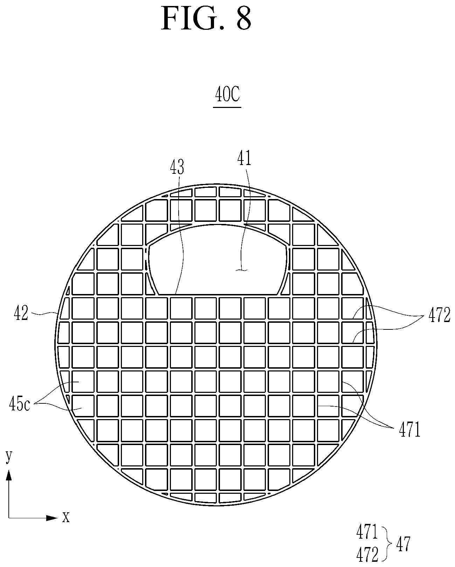

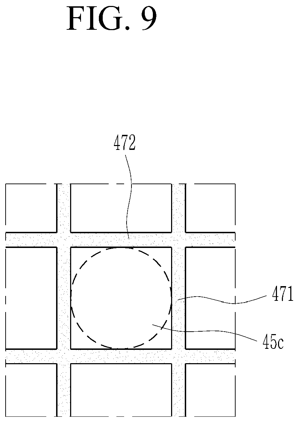

FIG. 8 is a top plan view of an insulation plate according to some embodiments. FIG. 9 is a partial enlarged view of the insulation plate shown in FIG. 8.

Referring to FIG. 8 and FIG. 9, in an insulation plate 40C according to some embodiments, a plurality of linear members 47 may be formed as a combination of a plurality of third linear members 471 and a plurality of fourth linear members 472. The plurality of third linear members 471 may be positioned parallel to the first direction (y-axis direction), and the plurality of fourth linear members 472 may be positioned along the second direction (x-axis direction) perpendicular to the first direction (y-axis direction). The plurality of third linear members 471 may be spaced apart (e.g. equally spaced apart) from each other. The plurality of fourth linear members 472 may be spaced apart (e.g. equally spaced apart) from each other.

Quadrangular openings 45c (e.g. square openings) may be regularly positioned (e.g. equally spaced) between the plurality of third linear members 471 and the plurality of fourth linear members 472. The material and a thickness of the insulation plate 40C and a size of an opening 45c may be the same as those of the insulation plate 40A according to some embodiments as described above. Here, supposing an imaginary circle (shown as a dotted line in FIG. 9) is tangent to sides of the quadrangular opening 45c, the size of the opening 45c may be defined as a diameter of the imaginary circle.

The insulation plate 40C according to some embodiments may be configured the same as the insulation plate 40A according to some embodiments as described above, except that the plurality of linear members 47 are configured as a plurality of third and fourth linear members 471 and 472 that form a lattice pattern.

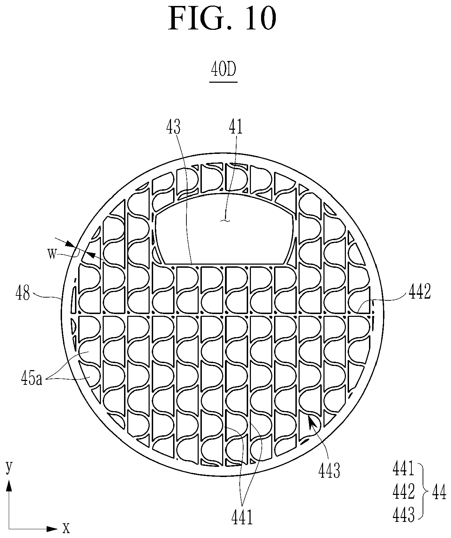

FIG. 10 is a top plan view of an insulation plate according to some embodiments.

Referring to FIG. 10, an insulation plate 40D according to some embodiments may include an adsorption portion 48 formed in a ring shape along an edge (of the insulation plate). The adsorption portion 48 may be configured as a ring shape of a preset width, and the width of the adsorption portion 48 may be larger than that of the linear member 44. That is, the absorption portion 48 may have the largest width in the entirety of the insulation plate 40D.

In the manufacturing process of the secondary battery, a vacuum adsorption-type transport device may be used to transport the insulation plate. In the vacuum adsorption method, the object to be transported is air-tightly held by drawing out air (i.e. applying a vacuum at the point of contact), and thus the air-tight holding may be difficult when an opening exists in the object to be transported or when the object to be transported is a porous material. Because the adsorption portion 48 is a solid region without an opening, it may be easily adsorbed by a vacuum adsorption-type transport device, and the transport device may relatively easily transport the insulation plate 40D by using the adsorption portion 48.

The adsorption portion 48 may have a width w of approximately 0.5 mm to 1.8 mm. If the width of the adsorption portion 48 is less than 0.5 mm, the adsorption by the transport device may not be easy, and when it exceeds 1.8 mm, uniform injection of the electrolyte solution with respect to the electrode assembly 10 may deteriorate.

The insulation plate 40D according to some embodiments is configured the same as the insulation plate of the embodiments described above, except that the adsorption portion 48 is further included. In FIG. 10, the insulation plate 40D according to some embodiments includes a base configuration of the embodiments illustrated and described with respect to FIG. 3.

The table below shows the results of testing the performance of the insulation plate depending on the size of the opening in the insulation plate of the embodiments described with respect to FIG. 3 above. In the table below, X indicates poor, Δ indicates medium, ∘ indicates excellent, and ⊚ indicates very excellent.

**Table 1**

| Size of opening (mm) | Insulation performance | Gas discharge performance | PPR performance |
|---|---|---|---|
| Less than 0.1 | ○ | X | X |
| 0.1 | ○ | ○ | Δ |
| 0.5 | ○ | ○ | Δ |
| 1 | ○ | ○ | ○ |
| 2 | ○ | ○ | ○ |
| 3 | Δ | ⊚ | ⊚ |
| 3.5 | X | ⊚ | ⊚ |

In the above table, insulation performance shows whether a short circuit of the positive electrode component part and the negative electrode component part occurs in a state that the positive electrode component part is located on a first side of the insulation plate and the negative electrode component part is located on an opposite side. It has been found that when the size of the opening is 3 mm, short circuiting occurred in some cases, and when the size of the opening is 3.5 mm, the insulation function is lost.

The gas discharge performance is an experiment on whether or not the gas flow through the insulation plate is smooth, in which the smaller the size of the opening, the more difficult it is for gas to pass through, and the larger the size of the opening, the easier it is for gas to pass through. The insulation performance and gas discharge performance of the insulation plate are in inversely proportional to each other.

An electric vehicle or an energy storage device includes a module made of a large amount of secondary batteries, and various safety evaluations are conducted. A passive propagation resistance (PPR) test is a type of thermal safety evaluation method, which evaluates the extent to which thermal runaway generated in a specific cell is propagated to other neighboring cells. The PPR performance may be classified according to the degree of damage to side surfaces of the case, in which the larger the size of the opening, the better the PPR performance.

Summarizing the results of Table 1, when the size of the opening located in the insulation plate satisfies the condition of approximately 0.1 mm to 3 mm, the insulation plate may satisfy all of the desired insulation performance, the gas discharge performance, and the PPR performance properties.

While this invention has been described in connection with what is presently considered to be practical embodiments, it is to be understood that the invention is not limited to the disclosed embodiments, but, on the contrary, is intended to cover various modifications and equivalent arrangements included within the scope of the appended claims, and their equivalents.

The present invention may be defined by reference to the following clauses:
Clause 1. A secondary battery, comprising:
   an electrode assembly comprising a lead tab;
   a case configured to accommodate the electrode assembly and an electrolyte solution;
   a cap assembly electrically connected to the lead tab, and coupled to the case to seal the case; and
   an insulation plate between the electrode assembly and the cap assembly within the case, and having a tab opening configured to enable the lead tab to be drawn out,
   wherein the insulation plate comprises a plurality of linear members spaced apart from each other, and a plurality of openings having a size in a range of 0.1 mm to 3 mm are regularly positioned between the plurality of linear members.
Clause 2. The secondary battery of clause 1, wherein the plurality of linear members comprises:
   a plurality of first linear members parallel to a first direction; and
   a plurality of curved members between respective adjacent two first linear members among the plurality of first linear members, and configured to form a zigzag pattern by using a combination of a first semicircular portion and a second semicircular portion.
Clause 3. The secondary battery of clause 2, wherein:
   the first semicircular portion contacts a first one first linear member among the adjacent two first linear members, and the second semicircular portion contacts a second one first linear member; and
   the first semicircular portion and the second semicircular portion are alternately positioned one by one along the first direction, and contact each other at an inflection point.
Clause 4. The secondary battery of clause 1, wherein the plurality of linear members comprise:
   a plurality of first linear members parallel to a first direction; and
   a plurality of oblique members between respective adjacent two first linear members among the plurality of first linear members, and configured to form a zigzag pattern by using a combination of a first oblique portion and a second oblique portion.
Clause 5. The secondary battery of clause 4, wherein:
   the first oblique portion and the second oblique portion are alternately positioned one by one along the first direction; and
   the first oblique portion and the second oblique portion and a first one first linear member form a triangle.
Clause 6. The secondary battery of clause 2, wherein:
   the plurality of linear members further comprises a second linear member; and
   the second linear member crosses a center of the insulation plate along a second direction perpendicular to the first direction.
Clause 7. The secondary battery of clause 3, wherein:
   the plurality of linear members further comprises a second linear member; and
   the second linear member crosses a center of the insulation plate along a second direction perpendicular to the first direction.
Clause 8. The secondary battery of clause 4, wherein:
   the plurality of linear members further comprises a second linear member; and
   the second linear member crosses a center of the insulation plate along a second direction perpendicular to the first direction.
Clause 9. The secondary battery of clause 5, wherein:
   the plurality of linear members further comprises a second linear member; and
   the second linear member crosses a center of the insulation plate along a second direction perpendicular to the first direction.
Clause 10. The secondary battery of clause 1, wherein the plurality of linear members comprises:
   a plurality of third linear members parallel to a first direction; and
   a plurality of fourth linear members perpendicular to the plurality of third linear members.
Clause 11. The secondary battery of any one of clauses 1 to 10, wherein:
   the insulation plate further comprises an edge portion at an edge, and an opening edge portion forming a boundary of the tab opening; and
   the plurality of linear members contact the edge portion and the opening edge portion to be integrally connected to the edge portion and the opening edge portion.
Clause 12. The secondary battery of any one of clauses 1 to 11, wherein the insulation plate further comprises an adsorption portion formed in a ring shape along an edge.
Clause 13. The secondary battery of clause 12, wherein the adsorption portion has a width in a range of 0.5 mm to 1.8 mm.
Clause 14. The secondary battery of any one of clauses 1 to 13, wherein the insulation plate is manufactured by injection molding.
Clause 15. The secondary battery of any one of clauses 1 to 14, wherein the insulation plate comprises at least one of polypropylene (PP), polybutylene terephthalate (PBT), heat-resistant polystyrene (OPS), crosslinked polypropylene (PP), and crosslinked polyethylene (PE).
Clause 16. The secondary battery of any one of clauses 1 to 15, wherein the insulation plate has a thickness in a range of 0.3 mm to 0.5 mm.
Clause 17. A secondary battery, comprising:
   an electrode assembly comprising a lead tab;
   a case configured to accommodate the electrode assembly and an electrolyte solution;
   a cap assembly electrically connected to the lead tab, and coupled to the case to seal the case; and
   an insulation plate between the electrode assembly and the cap assembly within the case, and provided with a tab opening for drawing out the lead tab,
   wherein the insulation plate comprises an edge portion at an edge, an opening edge portion forming a boundary of the tab opening, and a plurality of linear members spaced apart from each other in a region between the edge portion and the opening edge portion, and a plurality of openings are regularly positioned between the plurality of linear members.
Clause 18. The secondary battery of clause 17, wherein:
   the insulation plate is manufactured by injection molding; and
   the plurality of openings each have a size in a range of 0.1 mm to 3 mm.

## Claims

1. A secondary battery, comprising:
an electrode assembly comprising a lead tab;
a case configured to accommodate the electrode assembly and an electrolyte solution;
a cap assembly electrically connected to the lead tab, and coupled to the case to seal the case; and
an insulation plate between the electrode assembly and the cap assembly within the case, and having a tab opening configured to enable the lead tab to be drawn out,
wherein the insulation plate comprises a plurality of linear members spaced apart from each other, and a plurality of openings having a size in a range of 0.1 mm to 3 mm are regularly positioned between the plurality of linear members.

2. The secondary battery of claim 1, wherein the plurality of linear members comprises:
a plurality of first linear members parallel to a first direction; and
a plurality of curved members between respective adjacent two first linear members among the plurality of first linear members, and configured to form a serpentine pattern by using a combination of a first semicircular portion and a second semicircular portion.

3. The secondary battery of claim 2, wherein:
the first semicircular portion contacts a first one first linear member among the adjacent two first linear members, and the second semicircular portion contacts a second one first linear member; and
the first semicircular portion and the second semicircular portion are alternately positioned one by one along the first direction, and contact each other at an inflection point.

4. The secondary battery of claim 1, wherein the plurality of linear members comprise:
a plurality of first linear members parallel to a first direction; and
a plurality of oblique members between respective adjacent two first linear members among the plurality of first linear members, and configured to form a zigzag pattern by using a combination of a first oblique portion and a second oblique portion.

5. The secondary battery of claim 4, wherein:
the first oblique portion and the second oblique portion are alternately positioned one by one along the first direction; and
the first oblique portion and the second oblique portion and a first one first linear member form a triangle.

6. The secondary battery of any one of claims 2 to 5, wherein:
the plurality of linear members further comprises a second linear member; and
the second linear member crosses a center of the insulation plate along a second direction perpendicular to the first direction.

7. The secondary battery of claim 1, wherein the plurality of linear members comprises:
a plurality of third linear members parallel to a first direction; and
a plurality of fourth linear member perpendicular to the plurality of third linear members.

8. The secondary battery of any one of claims 1 to 7, wherein:
the insulation plate further comprises an edge portion at an edge, and an opening edge portion forming a boundary of the tab opening; and
the plurality of linear members contact the edge portion and the opening edge portion to be integrally connected to the edge portion and the opening edge portion.

9. The secondary battery of any one of claims 1 to 8, wherein the insulation plate further comprises an adsorption portion formed in a ring shape along an edge.

10. The secondary battery of claim 9, wherein the adsorption portion has a width in a range of 0.5 mm to 1.8 mm.

11. The secondary battery of any one of claims 1 to 10, wherein the insulation plate is manufactured by injection molding.

12. The secondary battery of any one of claims 1 to 11, wherein the insulation plate comprises at least one of polypropylene (PP), polybutylene terephthalate (PBT), heat-resistant polystyrene (OPS), crosslinked polypropylene (PP), and crosslinked polyethylene (PE).

13. The secondary battery of any one of claims 1 to 12, wherein the insulation plate has a thickness in a range of 0.3 mm to 0.5 mm.

14. A secondary battery, comprising:
an electrode assembly comprising a lead tab;
a case configured to accommodate the electrode assembly and an electrolyte solution;
a cap assembly electrically connected to the lead tab, and coupled to the case to seal the case; and
an insulation plate between the electrode assembly and the cap assembly within the case, and provided with a tab opening for drawing out the lead tab,
wherein the insulation plate comprises an edge portion at an edge, an opening edge portion forming a boundary of the tab opening, and a plurality of linear members spaced apart from each other in a region between the edge portion and the opening edge portion, and a plurality of openings are regularly positioned between the plurality of linear members.

15. The secondary battery of claim 14, wherein:
the insulation plate is manufactured by injection molding; and/or
the plurality of openings each have a size in a range of 0.1 mm to 3 mm.
